# EUROPEAN PATENT APPLICATION

(11) **EP 4 026 787 A1**
(43) Date of publication of application: **13.07.2022**
(21) Application number: 20860315.9
(22) Date of filing: 03.09.2020
(51) Int. Cl.: B65D 65/40, B65D 75/36, B65D 77/20

(54) **PRESS-THROUGH PACKAGING MATERIAL AND PRESS-THROUGH PACKAGE USING SAME**

(30) Priority: 05.09.2019 JP 2019162232
(71) Applicant: Toyo Aluminium Kabushiki Kaisha, Osaka-shi, Osaka 541-0056 (JP)
(72) Inventor: SAITO, Mitunori, Osaka 541-0056 (JP); HIGASHI, Naoki, Osaka 541-0056 (JP); KAWASHIMA, Katsura, Osaka 541-0056 (JP); KANNO, Keiichi, Osaka 541-0056 (JP); FURUTA, Ryo, Osaka 541-0056 (JP); SHIRASAWA, Hirokazu, Osaka 541-0056 (JP); HIROBE, Genki, Osaka 541-0056 (JP)
(74) Representative: Nieuwenhuys, William Francis
(86) International application number: PCT/JP2020/033420
(87) International publication number: WO 2021/045152

(57) **Abstract**

The present invention provides a press-through packaging material with an anti-counterfeit label, without depending on a post-attached hologram sticker that can be peeled off and manufactured in a counterfeit manner. The present invention specifically provides a press-through packaging material comprising in sequence
a substrate,
an opaque underlayer laminated on at least a part of the surface of the substrate, and
a printing layer that contains a colored metal pigment, and that is formed on at least a part of the surface of the opaque underlayer;
the colored metal pigment comprising
a metal pigment,
an amorphous silicon oxide film layer formed on the surface of the metal pigment, and
metal particles supported on a part of or on the entire surface of the amorphous silicon oxide film layer,

the opaque underlayer having a mass per unit area of 0.5 g/m² or more and 3.0 g/m² or less, and
the printing layer having a mass per unit area of 1.0 g/m² or more and 3.5 g/m² or less.

## Description

### Technical Field

The present invention relates to a press-through packaging material, and a press-through package using the press-through packaging material. In particular, the present invention relates to a press-through packaging material with an anti-counterfeit label, and a press-through package using the press-through packaging material.

### Background Art

As a package for individually containing drugs, such as tablets, press-through packages (referred to as PTP, blister packs, etc.) are commonly used. A press-through package is composed of a drug container, and a cover material for covering the drug container. The press-through package is configured so that a drug is pressed from the container side to break the cover material, and thereby remove the drug.

In recent years, there have been concerns about the distribution of counterfeits of expensive and widely distributed drugs. However, since it is difficult to distinguish between genuine and counterfeit drugs from the appearance of the drugs themselves, an anti-counterfeit sticker or the like is attached to press-through packages. For example, Patent Literature (PTL) 1 discloses a press-through package with a hologram sticker attached to a press-through packaging cover material thereof to distinguish genuine products from counterfeit products.

### Citation List

### Patent Literature

PTL 1: JP2005-212811A

### Summary of Invention

### Technical Problem

However, it is difficult for the technique disclosed in PTL 1 to reliably inhibit the distribution of counterfeit drugs. This is because hologram stickers can possibly be peeled off and applied to the packaging of counterfeit drugs; or, hologram stickers counterfeited by taking advantage of users who do not know enough about the true hologram stickers can possibly be applied to the packaging of counterfeit drugs.

Accordingly, an object of the present invention is to provide a press-through packaging material with an anti-counterfeit label, without depending on a post-attached hologram sticker that can be peeled off and manufactured in a counterfeit manner; and a press-through package using the press-through packaging material.

### Solution to Problem

As a result of diligent research to achieve the above object, the present inventors found that the object can be achieved by a press-through packaging material comprising a printing layer containing a specific colored metal pigment, and have accomplished the present invention.

More specifically, the present invention provides the following press-through packaging materials and press-through package using any one of the press-through packaging materials.
1. A press-through packaging material comprising in sequence
   a substrate,
   an opaque underlayer laminated on at least a part of the surface of the substrate, and
   a printing layer that contains a colored metal pigment, and that is formed on at least a part of the surface of the opaque underlayer;
   the colored metal pigment comprising
      a metal pigment,
      an amorphous silicon oxide film layer formed on the surface of the metal pigment, and
      metal particles supported on a part of or on the entire surface of the amorphous silicon oxide film layer,
   the opaque underlayer having a mass per unit area of 0.5 g/m² or more and 3.0 g/m² or less, and
   the printing layer having a mass per unit area of 1.0 g/m² or more and 3.5 g/m² or less.
2. The press-through packaging material according to Item 1, wherein the metal particles contain at least one element selected from the group consisting of Cu, Ni, and Ag.
3. The press-through packaging material according to Item 1 or 2, wherein the amorphous silicon oxide film layer has a thickness of 10 nm or more and 1000 nm or less.
4. The press-through packaging material according to any one of Items 1 to 3, wherein the metal particles have an average particle diameter of 50 nm or less.
5. A press-through package comprising the press-through packaging material of any one of Items 1 to 4 used for a container and/or a cover material for a drug.

### Advantageous Effects of Invention

The press-through packaging material according to the present invention cannot be peeled off because a printing layer containing a specific colored metal pigment as an anti-counterfeit label is formed by printing. Since the printing layer significantly changes its color (color shift) depending on the viewing angle, it provides a greater deterrent against the distribution of counterfeit drugs than conventional hologram stickers that are attached later.

### Brief Description of Drawings

Fig. 1 is a schematic diagram showing an example of the printing layer in the press-through package of the present invention.
Fig. 2 is a cross-sectional schematic diagram showing an example of the colored metal pigment used in the present invention.

### Description of Embodiments

The press-through packaging material and the press-through package using the press-through packaging material according to the present invention are described in detail below. In the following description, the range of "A to B" means the range of "A or more to B or less," unless otherwise specified.

The press-through packaging material according to the present invention is characterized in that
the packaging material comprises in sequence
a substrate,
an opaque underlayer laminated on at least a part of the surface of the substrate, and
a printing layer that contains a colored metal pigment, and that is formed on at least a part of the surface of the opaque underlayer;
the colored metal pigment comprising
   a metal pigment,
   an amorphous silicon oxide film layer formed on the surface of the metal pigment, and
   metal particles supported on a part of or on the entire surface of the amorphous silicon oxide film layer,
   the opaque underlayer having a mass per unit area of 0.5 g/m² or more and 3.0 g/m² or less, and
   the printing layer having a mass per unit area of 1.0 g/m² or more and 3.5 g/m² or less.

The press-through packaging material according to the present invention can provide a greater deterrent against the distribution of counterfeit drugs than conventional hologram seals that are attached later. This is because a printing layer containing a specific colored metal pigment as an anti-counterfeit label is formed by printing, and cannot be peeled off; and the color of the printing layer changes significantly depending on the viewing angle (color shift).

### Press-Through Packaging Material

The press-through packaging material according to the present invention is a cover material and/or a container of which a press-through package is composed. When the press-through packaging material is a cover material, a substrate, which is described below, is a component of the cover material. An opaque underlayer and a printing layer, which are described below, are preferably provided on the surface of the substrate that is opposite to the surface of the substrate bonded to the container. When the press-through packaging material is a container, the substrate described below is a component of the container, and the opaque underlayer and the printing layer described below are preferably provided on the surface of the substrate that is opposite to the surface of the substrate bonded to the cover material.

In other words, the authenticity of a press-through package can be visually confirmed by forming an opaque underlayer and a printing layer on the outermost layer side of the press-through package in which drugs are contained (on one or both outer sides when the position of drugs contained is defined as inside). In particular, when the opaque underlayer and the printing layer are formed on the container side, it is preferable not to form the opaque underlayer and the printing layer on pockets for containing drugs, but to form the opaque underlayer and the printing layer at flanges around the pockets.

### Substrate

In the present invention, the substrate is a material that serves as a base of the press-through packaging material.

The substrate to be used in the present invention can be a material used in a known press-through packaging cover material and/or a press-through packaging container. Examples include metal foils such as aluminum foil, copper foil, gold foil, and silver foil; papers such as paper and synthetic paper; and resin films such as nylon, polyester films, and polyolefin films. These materials can be used singly, or as a composite of two or more. Colored resin films and the like can also be used as the resin films. Other examples of substrates include metal foils and resin films on which various colored layers, thermal adhesive layers, and the like, have been laminated, such as those commercially available.

In the present invention, a sheet or film comprising a metal vapor deposition layer, such as an aluminum vapor deposition layer, can also be used as the substrate. Examples include a laminated film having a metal vapor deposition layer formed on the surface of a resin film or the like by a known vapor deposition method (PVD, CVD, etc.). Examples of resin films include polyamide (nylon), polyethylene (in particular, high-density polyethylene), polypropylene (in particular, stretched polypropylene), vinyl chloride, an ethylene-vinyl alcohol copolymer, polyethylene naphthalate, polyethylene terephthalate, and the like.

The thickness of the metal vapor deposition layer is not limited. In general, the metal vapor deposition layer preferably has a thickness of about 200 to 1000Å. The resin film for metal deposition preferably has a thickness of about 9 to 50 µm.

In the present invention, it is particularly preferable to use an aluminum foil as the substrate. When the aluminum foil is used, the strength, barrier property, storability, and the like as a packaging material can be effectively exhibited.

The aluminum foil to be used can be a known or commercially available aluminum foil (including aluminum alloy foil; the same applies hereinafter). The hardness of the aluminum foil is also not limited. For example, any of soft foil, hard foil, and semi-hard foil can be appropriately used, depending on the purpose of use or required characteristics.

In the present invention, specific examples of aluminum foil include pure aluminum (JIS (AA) 1000 series, such as JIS 1N30, JIS 1070, and JIS 1100), Al-Mn series (JIS (AA) 3000 series, such as JIS 3003 and JIS 3004), Al-Mg series (JIS (AA) 5000 series), Al-Fe series (JIS (AA) 8000 series, such as JIS 8021 and JIS 8079), and the like. Among these, aluminum foils comprising a material (composition) such as JIS 1N30, JIS 1070, JIS 1100, JIS 3003, JIS 8021, and JIS 8079 can be preferably used.

Further, the aluminum foil can be subjected to patterning, degreasing/washing, anchor coating, overcoating, surface treatment, etc., by a known method, if necessary.

The thickness of the aluminum foil is not limited. The aluminum foil usually preferably has a thickness of 5 to 200 µm, and particularly preferably 12 to 50 µm. By setting the thickness of the aluminum foil within this range, more excellent water resistance (moisture resistance), strength, ease of handling the press-through package, and the like can be obtained.

### Opaque Underlayer

An opaque underlayer is laminated on at least a part of the surface of the substrate.

In the present invention, the opaque underlayer is a layer laminated on the substrate; and is a layer through which visible light is difficult to transmit, making it difficult to visually recognize the substrate. The opaque underlayer also serves as a base material on which a printing layer described below is formed, and that supports the printing layer. The opaque underlayer can be directly laminated on the substrate, or laminated via another layer (such as an underlayer for facilitating the formation of the opaque underlayer) that is interposed between the substrate and the opaque underlayer.

The opaque underlayer may have any color, as long as it is opaque. For example, the opaque underlayer is preferably a white-colored layer or a black- (black ink) colored layer. Using a white-colored layer or a black-colored layer as the opaque underlayer facilitates the visibility of color shift by the printing layer, as described below.

The opaque underlayer is laminated in an amount in the range of 0.5 g/m² or more and 3.0 g/m² or less (preferably 0.5 g/m² or more 2.0 g/m² or less) on a solids mass basis per unit area of the substrate (also referred to as "mass per unit area"). When the solids mass basis per unit area is within this range, the color shift by the printing layer is more easily visible, as is described later.

The white-colored layer applied as the opaque underlayer is also called a white solid (layer), and has a white color due to a pigment such as titanium oxide. Preferable examples of pigments used in the white-colored layer include white pigments such as titanium oxide and zinc oxide. Titanium oxide is particularly preferable as the white pigment, from the viewpoint of better light reflectance of the coating film.

Further, in the present invention, a coloring material other than the white pigment can also be used together, as long as the effect of the present invention is not impaired (in particular, as long as a white-like color is exhibited). Examples of such other coloring materials include phthalocyanine blue, phthalocyanine green, quinacridone series, quinophthalene series, perylene series, dioxazine series, isoindolinone series, iron oxide, mica, color chip pigments thereof, and the like. These pigments can also be separately laminated as individual solid color layers.

The white-colored layer may contain a matrix resin (resin component). That is, the white-colored layer preferably has a structure in which a white pigment is dispersed in the matrix resin.

Accordingly, as the matrix resin of the white-colored layer, a transparent resin can be preferably used in order to fully bring out the effect of a white pigment. Such a resin is not particularly limited. In the present invention, at least one member selected from a vinyl chloride-vinyl acetate copolymer resin, a nitrocellulose resin, and a polypropylene resin can be preferably used. In particular, in the present invention, a vinyl chloride-vinyl acetate copolymer resin is preferably used as the matrix resin in terms of coating film performance and the like.

The content of the white pigment (in particular, titanium oxide) in the white-colored layer can be set according to, for example, the type of white pigment used. In particular, when the white pigment is dispersed in the matrix resin, the white pigment content is usually about 20 to 60 mass%, and particularly preferably 25 to 55 mass%.

The white-colored layer can be formed, for example, by a method comprising the steps of applying a coating liquid containing a white pigment and drying.

The coating liquid can be prepared, for example, by a method comprising mixing a white pigment and a solvent; or by a method comprising mixing a white pigment, a solvent, and a resin component.

Examples of solvents include aromatic hydrocarbons such as toluene and xylene; alicyclic hydrocarbon solvents such as methylcyclohexane and cyclohexane; ester solvents such as ethyl acetate and butyl acetate; ketone solvents such as methyl ethyl ketone and acetone; alcohol solvents such as isopropyl alcohol and denatured ethanol; and like organic solvents. These solvents can be used singly, or in a combination of two or more.

As the resin component, a resin component that forms a matrix resin can be used. Accordingly, in the present invention, at least one member selected from the group consisting of a vinyl chloride-vinyl acetate copolymer resin, a nitrocellulose resin, and a polypropylene resin can be preferably used. As long as the effect of the present invention is not impaired, other resins, such as polyvinyl butyral resin, phenolic resin, maleic acid resin, alkyd resin, chlorinated polypropylene resin, vinyl chloride-vinyl acetate copolymer resin, acrylic resin, and modified olefin resin, can also be used. These can be used singly, or in a combination of two or more. In the present invention, an organic binder component contained in a known or commercially available ink can also be used.

As long as the effect of the present invention is not impaired, the coating liquid may contain additives, such as a dispersant, a surfactant, a leveling agent, a surface conditioner, an anti-sagging agent, a thickener, a defoaming agent, and a lubricant.

The amount of the white pigment dispersed in the coating liquid may be appropriately set so that the content of the white pigment in the formed white-colored layer falls within a predetermined range. More specifically, when the solids content is the white pigment and the resin component, the amount of dispersion can be set while adjusting the ratio of the white pigment to the resin component.

In the present invention, the coating liquid can be prepared by uniformly mixing these components. In mixing, a known or commercially available kneader, mixer, or the like can also be used. When the resin component is used, the resin component can be dissolved or dispersed in the organic solvent.

The method of applying the coating liquid is not particularly limited. The application (lamination) can be performed by a method using a gravure roll coater, offset printing, flexo printing, UV printing, or a curtain flow coater. Application by spraying or the like can also be performed.

After the application, the coating film can be dried to obtain a white-colored layer. The drying method can be natural drying or heat drying. When heating, the temperature can be set to, for example, about 50 to 160°C. In the coating process, in the present invention, the above application and drying can be performed twice or more repeatedly to obtain a predetermined thickness.

The black- (black ink) colored layer has a black color due to a pigment such as carbon black. Examples of pigments preferably used for the black-colored layer include black pigments such as carbon black and perylene black. Carbon black is particularly preferably used as a black pigment, in terms of better light reflectance of the coating film.

In the present invention, as long as the effect of the present invention is not impaired (in particular, as long as a black-like color is exhibited), coloring materials other than black pigments can be used. Examples of such other coloring materials include phthalocyanine blue, phthalocyanine green, quinacridone series, quinophthalene series, perylene series, dioxazine series, isoindolinone series, iron oxide, mica, color chip pigments thereof, and the like. These pigments can be separately laminated as individual solid color layers.

The black-colored layer may contain a matrix resin (resin component). More specifically, the black-colored layer preferably has a structure in which a black pigment is dispersed in the matrix resin.

Therefore, as the matrix resin of the black-colored layer, a transparent resin can be preferably used in order to fully bring out the effect of the black pigment. Such a resin is not particularly limited. In the present invention, at least one member selected from the group consisting of vinyl chloride-vinyl acetate copolymer resin, nitrocellulose resin, and polypropylene resin can be preferably used. It is particularly preferable in the present invention to use a vinyl chloride-vinyl acetate copolymer resin as the matrix resin, in terms of coating film performance and the like.

The content of black pigment (in particular, carbon black) in the black-colored layer can be set, for example, according to the type of black pigment used. In particular, when the black pigment is dispersed in the matrix resin, the black pigment content is usually about 10 to 70 mass%, and particularly preferably 15 to 65 mass%. The method for forming the black-colored layer can be the same as the method for forming the white-colored layer.

When the opaque underlayer is provided on a press-through packaging cover material, the opaque underlayer is usually provided on the surface opposite to the surface sealed to the container; however, it can be provided on both surfaces of the substrate. For example, when a transparent material is used to form the container and if an opaque underlayer is also provided on the surface of the press-through packaging cover material that is in contact with the press-through packaging container, the opaque underlayer is also visible from the press-through packaging container side. This can improve the visibility etc. when a letter pattern layer is formed on the opaque underlayer.

Coloring materials other than the white pigment, black pigment, or the like can also be used together. Examples of such other coloring materials include phthalocyanine blue, phthalocyanine green, quinacridone series, quinophthalene series, perylene series, dioxazine series, isoindolinone series, iron oxide, mica, color chip pigments thereof, and the like. These pigments can also be separately laminated as individual solid color layers.

### Printing Layer

The printing layer in the present invention is a layer formed on at least a part of the surface of the opaque underlayer; and is a layer containing a specific colored metal pigment, which is described later. The printing layer is an anti-counterfeit layer that functions as an anti-counterfeit label in such a distinguishable manner that its specific color and color-shift properties enable consumers to distinguish genuine products from counterfeit products.

The shape of the printing layer is not particularly limited. The printing layer may have a polygonal, circular, substantially circular, or indefinite shape; or may be in the form of a letter or symbol. When the opaque underlayer is laminated on the entire surface of the substrate, the printing layer may be laminated on the entire surface of the opaque underlayer. When the opaque underlayer is laminated on both surfaces of the substrate, the printing layer may also be laminated on both sides.

The printing layer may consist of only the colored metal pigment; or may contain an inorganic pigment, an organic pigment, or the like, as long as its color-shift properties are not affected.

The printing layer is laminated in an amount in the range of 1.0 g/m² or more and 3.5 g/m² or less (preferably 1.2 g/m² or more and 2.7 g/m² or less) on a solids mass basis per unit area of the substrate (mass per unit area)). A solids mass per unit area within this range can provide good visibility of the color shift by the printing layer, as described below.

### Colored Metal Pigment

The colored metal pigment in the present invention contains: a metal pigment that serves as a core; an amorphous silicon oxide film layer formed on the surface of the metal pigment; and metal particles supported on a part of or on the entire surface of the amorphous silicon oxide film layer. Based on this structure, the colored metal pigment can exhibit color-shift properties as an anti-counterfeit label.

In the colored metal pigment of the present invention, metal particles are formed in such a manner as to wholly or partially cover the metal pigment, whereby only the reflected light from the metal pigment that has passed through the layer of the metal particles or between the metal particles is recognized as visible light. As a result, the reflected lightness from the metal pigment is attenuated, thus producing chroma; i.e., color. Moreover, interference between the reflected light from the surface of the metal pigment and reflected light from the surface of the metal particles develops highly saturated interference colors. Furthermore, when the amorphous silicon oxide film layer is thick, changes in color tone depending on the viewing angle (color-shift properties) are significantly great. Even in the case where metal particles exist in the form of a continuous layer, as long as the metal particle layer has a thickness that allows light to pass therethrough, the interference colors described above can be developed.

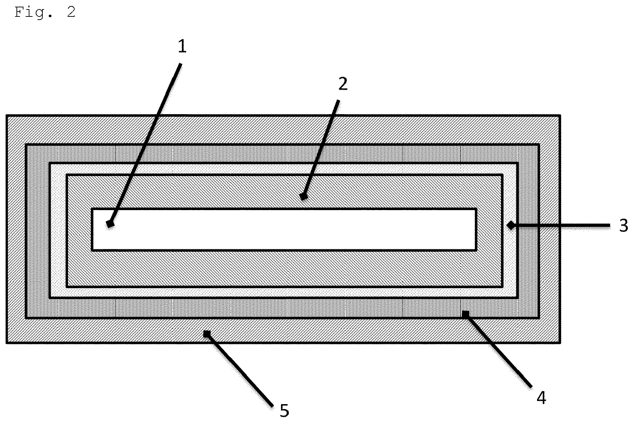

As will be described in detail below, the colored metal pigment may optionally have an underlayer formed between the metal pigment that serves as a core, and the amorphous silicon oxide film layer. An intermediate layer (a metal layer (intermediate layer A) and/or a metal oxide layer (intermediate layer B) comprising a metal oxide other than silicon oxide) may optionally be formed between the amorphous silicon oxide film layer and the metal particles. A weather-resistant coating layer (protective layer) may be formed on the outside of the metal particles. In a cross-sectional schematic diagram showing one example of the colored metal pigment in Fig. 2, an amorphous silicon oxide layer 2, an intermediate layer 3, metal particles 4, and a weather-resistant coating layer 5 are formed in this order on the surface of a metal pigment 1 that serves as a core.

When an intermediate layer is formed, metal particles are brought into close contact to prevent them from dropping, thus making it easier to obtain a stable colored metal pigment capable of producing varied interference colors with a variety of hues. The intermediate layer is preferably formed over the entire surface of the amorphous silicon oxide film layer. However, even if the intermediate layer is not formed on a part of the surface of the amorphous silicon oxide film layer, this does not depart from the scope of the present invention, as long as the effect of the present invention is provided.

The intermediate layer is preferably a metal layer (intermediate layer A) and/or a metal oxide layer comprising a metal oxide other than silicon oxide ((intermediate layer B) also referred to as "metal oxide layer"). When the intermediate layer comprises both a metal layer and a metal oxide layer, the order of laminating these layers is not particularly limited. More specifically, the configuration may be such that a metal layer is laminated on the surface of the amorphous silicon oxide film layer, and a metal oxide layer is laminated on the surface of the metal layer; or such that a metal oxide layer is laminated on the surface of the amorphous silicon oxide film layer, and a metal layer is laminated on the surface of the metal oxide layer. The intermediate layer may contain two or more metal layers, and two or more metal oxide layers. The order of laminating these layers in this case is also not particularly limited.

The structural features of the colored metal pigments are described in detail below.

### Metal Pigments

Examples of preferable metal pigments that serve as a core include aluminum, copper, zinc, titanium, iron, nickel, chromium, alloys of these metals, flake glass coated with these metals, other metal-coated inorganic pigments, and the like. Among these, aluminum is particularly preferable in terms of designability. Aluminum is advantageous because variously colored metal pigments that produce interference colors can be obtained by forming an amorphous silicon oxide film layer, and further supporting metal particles.

The average particle diameter of the metal pigment is preferably, for example, in the range of 2 to 300 µm. When the average particle diameter is 2 µm or more, a colored metal pigment that provides a good finished appearance and a good hiding power to the coating film for forming a printing layer can be obtained. When the average particle diameter is 300 µm or less, a colored metal pigment can be obtained that prevents degradation of the finished appearance of the coating film due to poor dispersion of the colored metal pigment. The average particle diameter is more preferably within the range of 5 to 100 µm. The average particle diameter of the metal pigment in this specification means an average major diameter. This average particle diameter can be measured by a laser diffraction method.

The shape of the metal pigment is not particularly limited. The metal pigment can take a variety of shapes, such as spherical, granular, polygonal, indefinite, lumpy, flaky, and like shapes. A flaky shape is preferable from the viewpoint of obtaining good designability and a variety of hues.

When the metal pigment is in the form of flakes, a preferable thickness (average thickness) of the flakes is, for example, in the range of 0.01 to 5 µm. When the thickness is 0.01 µm or more, a colored metal pigment capable of maintaining a good finished appearance without impairing the light resistance and weather resistance of the coating film can be obtained. When the thickness is 5 µm or less, a colored metal pigment that provides good designability and a variety of hues to the coating film can be obtained. The thickness is more preferably in the range of 0.02 to 1 µm. This thickness can be calculated from the water surface diffusion area, and the specific gravity of the metal pigment used as the core.

Thus, the metal pigment preferably has a flaky (i.e., scaled) shape. Preferable examples include metal pigments having a ratio A/B in the range of 5 to 1000, wherein A represents the average particle diameter and B represents the average thickness. When the ratio A/B is 5 or more, the coating film has good designability, and a wider variety of hues can be produced. On the other hand, a ratio A/B of 1000 or less is preferable because deformation of the metal pigment during the production of the colored metal pigment and reduction of dispersibility of the colored metal pigment in the resin composition are less likely to occur. The ratio A/B is more preferably in the range of 15 to 500. It is particularly preferable that the metal pigment has a so-called silver dollar-type coin shape, which is a flaky shape having a rounded end surface.

The metal pigment used in the present invention can be obtained, for example, as an atomized powder or as a powder formed by milling metal thin pieces by the wet ball mill method (i.e., the Hall method), or by the dry ball mill method. Alternatively, the metal pigment can also be obtained by vapor-depositing a metal thin film on a film or the like, followed by peeling and milling. Metal-coated flake-shaped glass and other metal-coated pigments can be obtained by forming a simple substance or an alloy of Ag, Cu, Ni, Fe, Co, Cr, Sn, or the like into a layer on a flaky or granular inorganic substrate, such as flaky glass, mica, alumina, silica, or titanium oxide, by a method such as electroless plating, vapor deposition, or sputtering.

### Underlayer

An underlayer may be formed on the surface of the metal pigment before forming the amorphous silicon oxide film layer. Examples of underlayers include, but are not limited to, a layer formed of a single film or a mixture film of at least any one of oxides, hydroxides, and hydrates that contain at least one element selected from the group consisting of molybdenum, phosphorus, and aluminum. Even when the underlayer is formed on the surface of the metal pigment in this manner, it is expressed herein that the amorphous silicon oxide film layer is formed on the surface of the metal pigment.

### Amorphous Silicon Oxide Layer

The colored metal pigment has an amorphous silicon oxide film layer laminated on the surface of the metal pigment. The amorphous silicon oxide film layer is preferably formed on the entire surface of the metal pigment. However, even if the amorphous silicon oxide film layer is not formed on a part of the surface of the metal pigment, this does not depart from the scope of the present invention as long as the effect of the present invention is provided. This amorphous silicon oxide film layer can be formed directly on the surface of the metal pigment. However, the underlayer described above is preferably interposed between the metal pigment and the amorphous silicon oxide film layer, in view of ensuring the water resistance of the metal pigment, and improving the adhesion of the amorphous silicon oxide film layer.

The thickness of the amorphous silicon oxide film layer is not particularly limited; however, it is preferably in the range of more than 150 nm and 1000 nm or less. When the layer thickness exceeds 150 nm, the optical path difference for producing the interference effect becomes long; accordingly, a coating film that exhibits high saturation and great color tone changes can be formed. If the thickness exceeds 1000 nm, it takes a long time to form the amorphous silicon oxide film layer, resulting in poor productivity; or the thickness of the entire colored metal pigment becomes large, which may impair the smoothness of the amorphous silicon oxide film layer. The thickness of the amorphous silicon oxide film layer can be measured by cross-sectional observation using a scanning electron microscope. In this case, any 50 colored metal pigments are subjected to this measurement, and the average value is used as the thickness of the amorphous silicon oxide film layer.

The method for forming the amorphous silicon oxide film layer is, for example, a method comprising stirring or kneading a metal pigment and a solution containing an organosilicon compound in a slurry state or a paste state, while keeping the resulting mixture basic or acidic. This allows the formation of an amorphous silicon oxide film layer on the metal pigment surface, or on the surface of an undercoat layer formed on the surface of the metal pigment.

Examples of the organosilicon compound include methyltriethoxysilane, methyltrimethoxysilane, tetraethoxysilane, tetramethoxysilane, tetraisopropoxysilane, and the like, and condensates thereof; γ-aminopropyltriethoxysilane; N-2-aminoethyl-3-aminopropyltriethoxysilane; N-2-aminoethyl-3-aminopropylmethyldimethoxysilane, and the like.

Examples of preferable solvents for dissolving a silicon compound to form a solution containing the organosilicon compound include hydrophilic solvents such as methyl alcohol, ethyl alcohol, isopropyl alcohol, n-propyl alcohol, t-butyl alcohol, n-butyl alcohol, isobutyl alcohol, ethyl cellosolve, butyl cellosolve, propylene glycol monobutyl ether, dipropylene glycol monomethyl ether, propylene glycol monopropyl ether, and acetone. Preferably, the solvent further contains water sufficient for hydrolyzing alkoxysilane.

In this way, the amorphous silicon oxide film layer is formed on the surface of the metal pigment by hydrolyzing an organosilicon compound in a solvent containing as a main component a hydrophilic solvent in which a metal pigment is dispersed, and causing amorphous silicon oxide to deposit on the metal pigment.

The term "amorphous" in the amorphous silicon oxide film layer refers to a state in which no clear diffraction peaks derived from silicon oxide are detected in the crystal structure analysis by X-ray diffraction.

### Intermediate Layer A (in particular, regarding a metal layer as an electroless plating catalyst layer)

When metal particles are formed by electroless plating using a water-soluble metal salt, a metal layer can be formed by a method used as a pretreatment for electroless plating, and can be used as intermediate layer A. In general, the pretreatment for electroless plating includes the catalyst (also referred to as catalyzing)-accelerator (also referred to as accelerating) process and the sensitizing-activating process. Either of these processes can be used. Only the catalyst process or only the sensitizing process may also be performed.

The catalyst-accelerator process is a method comprising immersing in a catalyst a metal pigment having an amorphous silicon oxide film layer formed thereon, wherein the catalyst is a mixed solution containing Sn and any one of Pd, Pt, and Au, to allow a complex compound of Sn and any one of Pd, Pt and Au to be adsorbed on the surface of the metal pigment, and then immersing the metal pigment in an accelerator, which is an acidic solution such as sulfuric acid or hydrochloric acid or an alkaline solution such as sodium hydroxide or ammonia, to remove Sn and activate any of Pd, Pt, and Au.

The sensitizing-activating process is a method comprising immersing in a sensitizing solution a metal pigment having an amorphous silicon oxide film layer formed thereon, wherein the sensitizing solution is an Sn solution, to allow Sn to be adsorbed on the surface of the metal pigment, and then using a solution containing any one of Pd, Pt, and Au as an activating solution to allow any one of Pd, Pt, and Au to be supported on the surface of the metal pigment.

The sensitizing process is a method comprising immersing in a sensitizing solution a metal pigment having an amorphous silicon oxide film layer formed thereon, wherein the sensitizing solution is an Sn solution, to allow an Sn compound to be adsorbed on the surface of the metal pigment, thereby allowing Sn and/or Sn compound to be supported on the surface of the metallic pigment.

The metal source of intermediate layer A formed by the method used as a pretreatment of electroless plating can be, for example, a water-soluble metal salt containing any of Sn, Pd, Pt, and Au. Specific examples of metal salts include tin chloride, tin oxalate, tin sulfate, tin bromide, tin acetate, tin borofluoride, tin fluoride, sodium stannate, potassium stannate, tin methanesulfonate, tin sulfide, tin silicofluoride, palladium chloride, palladium acetate, palladium bromide, palladium hydroxide, palladium nitrate, palladium oxide, palladium sulfate, gold bromide, gold chloride, platinum chloride, platinum oxide, and the like.

An electroless plating catalyst layer of Sn, Pd, Pt, Au, or the like is formed as intermediate layer A by such a method as described above. After this, metal particles can be formed on the surface of intermediate layer A by electroless plating. When the metal pigment having intermediate layer A formed is immersed in an electroless plating solution, a reducing agent in the plating solution is oxidized on the surface of intermediate layer A due to the catalytic activity of intermediate layer A. Metal ions in the electroless plating solution are reduced by electrons emitted at this time; and the metal is deposited on the surface of intermediate layer A, thus forming metal particles.

This intermediate layer A preferably contains at least one member selected from the group consisting of Sn, Pd, Pt, and Au, as described above.

The thickness of the intermediate layer A is preferably 30 nm or less. In this case, excellent saturation and interference colors are provided by the obtained colored metal pigment. The thickness of intermediate layer A is preferably within the range of 0.1 to 10 nm. The thickness of intermediate layer A can be confirmed as a metal layer formed between the amorphous silicon oxide film layer and the metal particles, for example, by high-magnification (about 3000000X magnification) observation with a transmission electron microscope (TEM). The presence of elements can also be confirmed by local EDS (energy-dispersive X-ray spectroscopy). The intermediate layer A is typically formed by aggregates of particles formed into a continuous layer.

The intermediate layer A may be uniformly or non-uniformly deposited on the surface of the amorphous silicon oxide film layer (or the intermediate layer B (metal oxide layer) described below). For example, even if the thickness of intermediate layer A is so small that the intermediate layer A cannot be observed with TEM, the metal particles can be deposited densely and uniformly when the intermediate layer A is deposited.

### Intermediate Layer B (in particular, metal oxide layer)

When a metal oxide layer comprising a metal oxide other than silicon oxide (metal oxide layer) is used as intermediate layer B, this metal oxide layer is preferably formed over the entire surface of the amorphous silicon oxide film layer. However, even if the metal oxide layer is not formed on a part of the surface of the amorphous silicon oxide film layer, this does not depart from the scope of the invention, insofar as the effect of the present invention is provided. The formation of such a metal oxide layer allows the metal particles to be deposited densely and uniformly at regular intervals due to a good adsorption state between the metal particles and the metal oxide layer, as described below, to thereby produce highly saturated interference colors.

Such a metal oxide layer preferably contains an oxide of at least one element selected from the group consisting of Mg (magnesium), Sn (tin), Zn (zinc), Co (cobalt), Ni (nickel), Fe (iron), Zr (zirconium), Ti (titanium), and Ce (cerium), among which a metal oxide of any one of Sn, Zn, Ti, and Ce is particularly preferably contained in the metal oxide layer.

Examples of preferable methods for forming the metal oxide layer include, but are not limited to, a method of hydrolytically depositing metal alkoxide for forming a metal oxide layer by a sol-gel process on the amorphous silicon oxide film layer; a method of neutralizing and depositing metal oxide by adding an alkali to a metal salt solution containing the metal for forming a metal oxide layer; a method of forming a metal oxide layer on the amorphous silicon oxide film layer by bringing a metal pigment having an amorphous silicon oxide film layer formed thereon into contact with a solution of an organometallic compound in an organic solvent, and heating for oxidation; and the like.

Examples of the metal alkoxide used in the hydrolytic deposition method include tetraethoxytin, tetrabutoxytitanium, and the like. A colloidal solution in which the metal alkoxide is dispersed can be preferably used. Examples of hydrolysis catalysts for the metal alkoxide include ammonia water, ethylenediamine, monoethanolamine, diethanolamine, hydrazine, urea, and the like.

Examples of metal salts that can be used in the neutralization-precipitation method include tin chloride, tin fluoride, zinc chloride, titanyl sulfate, cerium nitrate, cerium acetate, and the like. Examples of neutralizing agents of metal salts include aqueous ammonia, sodium hydroxide, monoethanolamine, diethanolamine, and the like. Examples of reaction solvents include water, ethanol, isopropyl alcohol, methyl propylene glycol, butyl cellosolve, and the like.

Examples of organometallic compounds that can be used in the method using an organometallic compound include fatty acid metal salts such as cobalt naphthenate, nickel stearate, zirconium stearate, and dibutyltin dilaurate. Examples of solvents for dissolving an organometallic compound include any organic solvent in which an organometallic compound can be dissolved, such as toluene, xylene, dimethylformamide, acetone, ethyl acetate, isopropyl alcohol, propylene glycol monomethyl ether, and butyl cellosolve. The heat treatment temperature for decomposing and oxidizing the organometallic compound is preferably 200 to 500°C. If the temperature is less than 200°C, it may be difficult to oxidize the organometallic compound. On the other hand, if the temperature exceeds 500°C, the metal pigment is likely to agglomerate, which may increase the risk of ignition.

When the metal particles described below are formed by electroless plating using a water-soluble metal salt, a layer containing Sn, Pt, Au, Pd, Zn, or the like (the aforementioned intermediate layer A), which is commonly used as a pre-treatment for the electroless plating, may be formed on the metal oxide layer (intermediate layer B). In the colored metal pigments of the present invention, even when such an intermediate layer is formed, it is expressed herein that the metal particles are formed in such a manner as to cover the amorphous silicon oxide film layer.

In the present invention, a metal layer (intermediate layer A) or a metal oxide layer (intermediate layer B) as a pretreatment for electroless plating is formed on the amorphous silicon oxide film layer, whereby metal particles can be selectively attached on the amorphous silicon oxide film layer. When intermediate layer A and intermediate layer B are formed, the interface between these two layers may be not clearly distinguishable. In this case, the intermediate layer A and intermediate layer B can be a mixture of the two layers.

In the present invention, the thickness of the intermediate layer B is preferably 30 nm or less. In this case, excellent saturation and interference colors are provided by the obtained colored metal pigment. The thickness of the intermediate layer B is more preferably within the range of 0.1 to 10 nm. The intermediate layer B may be uniformly or non-uniformly deposited on the surface of the amorphous silicon oxide film layer. If the intermediate layer B is too thick, the obtained colored metal pigment is also thick, thus resulting in reduced hiding power. On the other hand, if the intermediate layer B is too thin, a sufficient effect cannot be obtained, and the color tone is not stable. When the intermediate layer B is thick, the thickness can be measured by cross-sectional observation using a transmission electron microscope (TEM). When the intermediate layer B is thin, its presence can be confirmed by surface analysis of the metal pigment by X-ray photoelectron spectroscopy (XPS).

### Metal Particles

In the colored metal pigment, the metal particles are supported on a part of or on the entire surface of the amorphous silicon oxide film layer. In the case of forming an intermediate layer, the metal particles are formed in such a manner as to cover a part of or the entire surface of the intermediate layer.

In the present invention, interference occurs between the reflected light from the surface of the metal particles and the reflected light from the surface of the core metal pigment that passes through the amorphous silicon oxide film layer and the metal particle layer, whereby a colored metal pigment that produces highly saturated interference colors can be obtained.

Examples of preferable metal particles include particles containing at least one member selected from the group consisting of Al (aluminum), Ti (titanium), Cr (chrome), Fe (iron), Co (cobalt), Ni (nickel), Cu (copper), Zn (zinc), Ru (ruthenium), Rh (rhodium), Pd (palladium), Ag (silver), Sn (tin), Pt (platinum), Au (gold), and alloys thereof. When the metal particles contain at least one member selected from the group consisting of these metals and alloys of these metals, a colored metal pigment that exhibits highly saturated interference colors is obtained. Examples of particularly preferable metal particles include particles containing at least one element selected from the group consisting of Cu, Ni, and Ag.

Such metal particles preferably have an average particle diameter of 50 nm or less. In this case, even when a colored metal pigment having a portion where the metal particles are formed and a portion where the metal particles are not formed, the surface morphology is relatively smooth, and a colored metal pigment that can exhibit a metallic appearance with an excellent finished appearance can be obtained. More preferably, the metal particles have an average particle diameter of 30 nm or less.

The lower limit of the average particle diameter of the metal particles is not particularly limited, and is preferably 1 nm or more. When the average particle diameter is less than 1 nm, the light passes through the metal particles; this reduces the reflected light from the metal particle layer and attenuates the coloring effect by optical interference, thus possibly reducing the saturation of the colored metal pigment obtained. Even when the metal particles exist in a continuous layer, the interference color as described above can be developed as long as the layer has a thickness that allows light to pass therethrough.

The metal particles formed in the colored metal pigment of the present invention are preferably formed in such a manner as to partially cover the amorphous silicon oxide film layer, without completely covering the amorphous silicon oxide film layer. The interval between each metal particle is preferably 10 nm or less, in terms of obtaining a colored metal pigment having a higher saturation. In this case, the interval between the metal particles of 10 nm or less corresponds to the portion not covered with the metal particles, as described above. In this case, the lower limit of the interval is preferably 0.1 nm or more.

Two or more metal particles may be overlapped together and deposited on the amorphous silicon oxide film layer. However, the metal particles are preferably deposited in the form of a single layer as individual particles. In this case, highly saturated interference colors are provided by interference between the reflected light from the metal particles and the reflected light reflected from the core metal pigment and having passed between the metal particles. Further, the metal particles are more preferably deposited without being in contact with each other on the metal particle-supporting layer. Most typically, it is preferable that the metal particles are deposited in the form of a single layer without being in contact with each other on the amorphous silicon oxide film layer, in such a manner that the intervals between the metal particles are 10 nm or less.

The deposited state of the metal particles, the average particle diameter thereof, and the intervals between the metal particles can be evaluated, for example, by cross-sectional observation with a transmission electron microscope (TEM). In this case, a method of subjecting, to focused ion beam (FIB) processing, a cross-section of the colored metal pigment having metal particles formed thereon can be preferably used to prepare a sample for observation. According to this method, the portion to be processed can be decided while viewing a scanning ion microscopy (SIM) image, whereby a specific portion in the sample can be processed. Processing is performed by the aforementioned method, and cross-sections of the metal particles are observed with a transmission electron microscope (TEM) at 30000 to 3000000X magnification.

The method for forming the metal particles is not particularly limited; however, vacuum deposition, sputtering, electroless plating, and like methods are preferable. Among these methods, the electroless plating method, which is capable of uniformly depositing the metal particles at predetermined intervals as described above and obtaining excellent saturation, is particularly preferable.

### Weather-Resistant Coating Layer (Protective Layer)

The colored metal pigment of the present invention may further have a weather-resistant coating layer formed on the metal particles. Examples of the weather-resistant film layer include a single film or a mixture film of any one of oxides, hydroxides, and hydrates that contain at least one element selected from the group consisting of aluminum, silicon, and cerium; or a resin-coated layer. The thickness of the weather-resistant coating layer is not limited; however, it is preferably within the range of 1 to 200 nm.

The main features of the colored metal pigment are as explained above. However, in the colored metal pigment, the metal particles are only required to be supported on a part of or on the entire surface of the amorphous silicon oxide film layer; any layer, granules, or the like other than those mentioned above may be further formed, as long as the effect of the present invention is not impaired.

### Thermal Adhesive Layer

The press-through packaging material may additionally have a thermal adhesive layer on at least a part of the outermost surface. In the press-through packaging material, the thermal adhesive layer is also referred to as a heat-sealing layer. This layer thermally bonds a cover material and a container to produce a press-through packaging package in which the contents are sealed. The thermal adhesive layer may be formed on the adhesion surface of either (or both) of the cover member and the container.

The heat adhesive layer is not particularly limited, and materials containing various thermoplastic resins as a heat sealable resin can be used. Examples of the resin component that form the thermal adhesive layer include high-density polyethylene, medium-density polyethylene, low-density polyethylene, linear polyethylene, saturated polyester, linear saturated polyester, unstretched polypropylene, chlorinated polypropylene, an ethylene-acrylic acid copolymer, an ethylene-methacrylic acid copolymer, an ethylene-ethyl acrylate copolymer, an ethylene-methyl acrylate copolymer, an ionomer, an ethylene-ethyl acrylate-maleic anhydride ternary copolymer, a vinyl chloride-vinyl acetate copolymer, polyolefin, carboxylic acid modified polyethylene, carboxylic acid modified polypropylene, a carboxylic acid modified ethylene-vinyl acetate copolymer, vinyl chloride, polystyrene, and the like. These can also be commercially available products. For example, commercially available products such as "Bondaine" (product name; manufactured by Sumitomo Chemical Co., Ltd.) and "Mersen M" (product name; manufactured by Tosoh Corporation) can be used.

The thickness of the thermal adhesive layer is not limited; however, it is usually preferably within the range of about 1 to 100 µm, and particularly preferably 2 to 50 µm. The amount of the thermal bonding layer formed is preferably about 1 to 30 g/m² on a mass basis after drying.

The method of forming the thermal adhesive layer can be performed, for example, by 1) a method comprising the steps of applying a coating liquid containing a resin component and drying; or 2) a method comprising the step of laminating a sealant film that has been formed using a resin component.

In the above method 1), a solution or dispersion of the resin component can be used as the coating liquid. As a solvent therefor, one or more of the various solvents mentioned above can be used. In this case, the amount of application may be about 2 to 15 g/m² on a dry basis.

The application method can be, for example, a coating (lamination) method using a gravure roll coater, offset printing, flexographic printing, UV printing, curtain flow coater, or the like. Application by spraying or the like can also be performed.

Preferable examples of the sealant film used in the above method 2) include resins such as polyamide (nylon), polyethylene (in particular, high-density polyethylene), polypropylene (in particular, stretched polypropylene), vinyl chloride, an ethylene-vinyl alcohol copolymer, polyethylene naphthalate, and polyethylene terephthalate. In this case, the resin film preferably has a thickness of about 9 to 50 µm. These sealant films can also be commercially available products.

### Examples

### Example 1

A black ink (containing a vinyl chloride-vinyl acetate copolymer resin as a matrix resin, and 5 mass% of carbon black on a solids basis) was applied to the entire glossy surface of a 20-µm-thick aluminum foil (1N30 hard material, Toyo Aluminium K.K.) to form a black-colored layer (before drying). The conditions for applying the black ink were set such that the black-colored layer was formed in an amount of 1.2 g/m² on a mass basis after drying by gravure printing using a gravure cylinder.

Subsequently, a color-shifting ink layer (before drying) was formed on the black-colored layer (before drying) using a color-shifting ink (containing a vinyl chloride-vinyl acetate copolymer resin as a matrix resin, a metal pigment, an amorphous silicon oxide film layer formed on the surface of the metal pigment, and 34.2 mass% of Chromashine CPK-20X (Toyo Aluminium K.K.) on a solids basis formed of metal particles supported on a part of the surface of the amorphous silicon oxide film layer) by gravure printing using a gravure cylinder, such that the color-shifting ink layer had a thickness of about 2 µm after drying.

Subsequently, varnish for protective layers containing an epoxy resin as a matrix resin was applied by using a gravure cylinder so as to cover the color-shifting ink layer (before drying), thereby forming a protective layer (before drying) so as to be in an amount of 2 g/m² on a mass basis after drying.

Thereafter, the layers were dried at an actual temperature of about 180°C on the surface for about 10 seconds. This resulted in 1.2 g/m² of the color-shifting ink layer laminated on the black-colored layer.

As described above, a PTP cover material was prepared in which aluminum foil (substrate), a black-colored layer (opaque underlayer), a color-shifting ink layer (printing layer), and a protective layer were laminated in this order.

Visual observation of the color-shifting ink layer confirmed that the black-colored layer was fully masked, and that a change in viewing angle from 45° to 90° with respect to the coated surface resulted in a change in color tone from yellow to light pink.

### Example 2

A PTP cover material was prepared in the same manner as in Example 1, except that 1.5 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 3

A PTP cover material was prepared in the same manner as in Example 1, except that 1.8 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 4

A PTP cover material was prepared in the same manner as in Example 1, except that 2.7 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 5

A PTP cover material was prepared in the same manner as in Example 1, except that 3.0 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 6

A PTP cover material was prepared in the same manner as in Example 1, except that the conditions for applying the black ink were set such that the black-colored layer was formed in an amount of 0.5 g/m² on a mass basis after drying; and that 2.7 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 7

A PTP cover material was prepared in the same manner as in Example 1, except that a white ink (containing a vinyl chloride-vinyl acetate copolymer resin as a matrix resin, and 51.2 mass% of titanium oxide on a solids basis) was applied to the entire glossy surface of aluminum foil to form a white-colored layer (opaque underlayer) such that the layer was formed in an amount of 2.0 g/m² on a mass basis after drying; and that 2.7 g/m² of the color-shifting ink layer was laminated on the white-colored layer. Visual observation of the color-shifting ink layer confirmed that the white-colored layer was fully masked, and that a change in viewing angle in the same manner as in Example 1 resulted in a change in color tone.

### Example 8

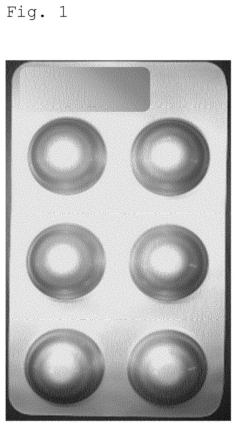

As illustrated in Fig. 1, the present specification shows an embodiment in which a printing layer is provided to a container. A black-colored layer and a color-shifting ink layer were provided to the glossy surface of a 45-µm-thick aluminum foil (a hard material that meets the JIS-H4160 standard; Toyo Aluminium K.K.) in the same manner as in Example 1.

Subsequently, a 25-µm-thick nylon film (Kohjin Co., Ltd.; Bonyl RX) was laminated on the glossy surface-side of the aluminum foil by using a polyurethane-based dry laminate adhesive (3 g/m² on a mass basis after drying); and a 60-µm-thick polyvinyl chloride-based sealant film was laminated on the other side of the aluminum foil by using a polyurethane-based dry laminate adhesive (3 g/m² on a mass basis after drying).

As described above, a PTP container material was prepared in which a polyvinyl chloride-based sealant film, aluminum foil (substrate), a black-colored layer (opaque underlayer), a color-shifting ink layer (printing layer), and a nylon film layer were laminated in this order.

Visual observation of the color-shifting ink layer confirmed that the black-colored layer was fully masked, and that a change in viewing angle in the same manner as in Example 1 resulted in a change in color tone.

### Example 9

A PTP container material was prepared in the same manner as in Example 8, except that 1.5 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 10

A PTP container material was prepared in the same manner as in Example 8, except that 1.8 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 11

A PTP container material was prepared in the same manner as in Example 8, except that 2.7 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 12

A PTP container material was prepared in the same manner as in Example 8, except that 3.0 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 13

A PTP container material was prepared in the same manner as in Example 8, except that the conditions for applying the black ink were set such that the black-colored layer was formed in an amount of 0.5 g/m² on a mass basis after drying; and that 2.7 g/m² of the color-shifting ink layer was laminated on the black-colored layer. Visual observation of the color-shifting ink layer confirmed that the black-colored layer was fully masked, and that a change in viewing angle in the same manner as in Example 1 resulted in a change in color tone.

### Example 14

A PTP container material was prepared in the same manner as in Example 8, except that a white ink (containing a vinyl chloride-vinyl acetate copolymer resin as a matrix resin, and 51.2 mass% of titanium oxide on a solids basis) was applied to the entire glossy surface of aluminum foil such that a white-colored layer (opaque underlayer) was formed in an amount of 2.0 g/m² on a mass basis after drying; and that 2.7 g/m² of the color-shifting ink layer was laminated on the white-colored layer. Visual observation of the color-shifting ink layer confirmed that the white-colored layer was fully masked, and that a change in viewing angle in the same manner as in Example 1 resulted in a change in color tone.

### Comparative Example 1

A PTP cover material was prepared in the same manner as in Example 1, except that 0.2 g/m² of the color-shifting ink layer was laminated on the black-colored layer. Visual observation of the color-shifting ink layer confirmed that the black-colored layer was not fully masked, and that a change in viewing angle in the same manner as in Example 1 resulted in no change in color tone.

### Comparative Example 2

A PTP cover material was prepared in the same manner as in Example 1, except that 0.6 g/m² of the color-shifting ink layer was laminated on the black-colored layer. Visual observation of the color-shifting ink layer confirmed that the black-colored layer was not fully masked, and that a change in viewing angle in the same manner as in Example 1 resulted in no change in color tone.

### Comparative Example 3

A PTP cover material was prepared in the same manner as in Example 1, except that 0.8 g/m² of the color-shifting ink layer was laminated on the black-colored layer. Visual observation of the color-shifting ink layer confirmed that the black-colored layer was not fully masked, and that a change in viewing angle in the same manner as in Example 1 resulted in no change in color tone.

### Comparative Example 4

A PTP cover material was prepared in the same manner as in Example 1, except that the black-colored layer was omitted, and that 1.2 g/m² of the color-shifting ink layer was laminated on aluminum foil. Visual observation of the color-shifting ink layer confirmed that a change in viewing angle in the same manner as in Example 1 resulted in no change in color tone.

### Comparative Example 5

A PTP cover material was prepared in the same manner as in Example 1, except that the black-colored layer was omitted, and that 2.7 g/m² of the color-shifting ink layer was laminated on aluminum foil. Visual observation of the color-shifting ink layer confirmed that a change in viewing angle in the same manner as in Example 1 resulted in no change in color tone.

### Comparative Example 6

A PTP cover material was prepared in the same manner as in Example 1, except that the conditions for applying a black ink were set such that the black-colored layer was formed in an amount of 0.2 g/m² on a mass basis after drying; and that 0.8 g/m² of the color-shifting ink layer was laminated on the black-colored layer. Visual observation of the color-shifting ink layer confirmed that a change in viewing angle in the same manner as in Example 1 resulted in no change in color tone.

### Comparative Example 7

A PTP cover material was prepared in the same manner as in Example 1, except that the conditions for applying a black ink were set such that the black-colored layer was formed in an amount of 0.2 g/m² on a mass basis after drying; and that 2.7 g/m² of the color-shifting ink layer was laminated on the black-colored layer. Visual observation of the color-shifting ink layer confirmed that a change in viewing angle in the same manner as in Example 1 resulted in no change in color tone.

### Comparative Example 8

A PTP cover material was prepared in the same manner as in Example 1, except that a white ink (containing a vinyl chloride-vinyl acetate copolymer resin as a matrix resin, and 51.2 mass% of titanium oxide on a solids basis) was applied to the entire glossy surface of aluminum foil such that a white-colored layer (opaque underlayer) was formed in an amount of 2.0 g/m² on a mass basis after drying; and that 0.8 g/m² of the color-shifting ink layer was laminated on the white-colored layer. Visual observation of the color-shifting ink layer confirmed that a change in viewing angle in the same manner as in Example 1 resulted in no change in color tone.

### Comparative Example 9

A PTP container material was prepared in the same manner as in Example 8, except that 0.2 g/m² of the color-shifting ink layer was laminated on the black-colored layer. Visual observation of the color-shifting ink layer confirmed that the black-colored layer was not fully masked, and that a change in viewing angle in the same manner as in Example 1 resulted in no change in color tone.

### Comparative Example 10

A PTP container material was prepared in the same manner as in Example 8, except that 0.6 g/m² of the color-shifting ink layer was laminated on the black-colored layer. Visual observation of the color-shifting ink layer confirmed that the black-colored layer was not fully masked, and that a change in viewing angle in the same manner as in Example 1 resulted in no change in color tone.

### Comparative Example 11

A PTP container material was prepared in the same manner as in Example 8, except that 0.8 g/m² of the color-shifting ink layer was laminated on the black-colored layer. Visual observation of the color-shifting ink layer confirmed that the black-colored layer was not fully masked, and that a change in viewing angle in the same manner as in Example 1 resulted in no change in color tone.

### Comparative Example 12

A PTP container material was prepared in the same manner as in Example 8, except that the black-colored layer was omitted, and that 1.2 g/m² of the color-shifting ink layer was laminated on aluminum foil. Visual observation of the color-shifting ink layer confirmed that a change in viewing angle in the same manner as in Example 1 resulted in no change in color tone.

### Comparative Example 13

A PTP container material was prepared in the same manner as in Example 8, except that the black-colored layer was omitted, and that 2.7 g/m² of the color-shifting ink layer was laminated on aluminum foil. Visual observation of the color-shifting ink layer confirmed that a change in viewing angle in the same manner as in Example 1 resulted in no change in color tone.

### Comparative Example 14

A PTP container material was prepared in the same manner as in Example 8, except that the conditions for applying a black ink were set such that the black-colored layer was formed in an amount of 0.2 g/m² on a mass basis after drying; and that 0.8 g/m² of the color-shifting ink layer was laminated on the black-colored layer. Visual observation of the color-shifting ink layer confirmed that a change in viewing angle in the same manner as in Example 1 resulted in no change in color tone.

### Comparative Example 15

A PTP container material was prepared in the same manner as in Example 8, except that the conditions for applying a black ink were set such that the black-colored layer was formed in an amount of 0.2 g/m² on a mass basis after drying; and that 2.7 g/m² of the color-shifting ink layer was laminated on the black-colored layer. Visual observation of the color-shifting ink layer confirmed that a change in viewing angle in the same manner as in Example 1 resulted in no change in color tone.

### Comparative Example 16

A PTP container material was prepared in the same manner as in Example 8, except that a white ink (containing a vinyl chloride-vinyl acetate copolymer resin as a matrix resin, and 51.2 mass% of titanium oxide on a solids basis) was applied to the entire glossy surface of aluminum foil such that a white-colored layer (opaque underlayer) was formed in an amount of 2.0 g/m² on a mass basis after drying; and that 0.8 g/m² of the color-shifting ink layer was laminated on the white-colored layer. Visual observation of the color-shifting ink layer confirmed that a change in viewing angle in the same manner as in Example 1 resulted in no change in color tone.

### Test Example 1

The appearance of the press-through packaging materials obtained in the Examples and Comparative Examples was visually evaluated. Table 1 illustrates the results.

**Table 1**

| | Cover Material or Container Material | Opaque underlayer (Black, White, or None) | Loaded Amount of Opaque underlayer (g/m²) | Loaded Amount of Color-shifting ink layer (g/m²) | Change in Color Tone |
|---|---|---|---|---|---|
| Example 1 | Cover | Black | 1.2 | 1.2 | Changed in Color Tone |
| Example 2 | Cover | Black | 1.2 | 1.5 | Changed in Color Tone |
| Example 3 | Cover | Black | 1.2 | 1.8 | Changed in Color Tone |
| Example 4 | Cover | Black | 1.2 | 2.7 | Changed in Color Tone |
| Example 5 | Cover | Black | 1.2 | 3.0 | Changed in Color Tone |
| Example 6 | Cover | Black | 0.5 | 2.7 | Changed in Color Tone |
| Example 7 | Cover | White | 2.0 | 2.7 | Changed in Color Tone |
| Example 8 | Container | Black | 1.2 | 1.2 | Changed in Color Tone |
| Example 9 | Container | Black | 1.2 | 1.5 | Changed in Color Tone |
| Example 10 | Container | Black | 1.2 | 1.8 | Changed in Color Tone |
| Example 11 | Container | Black | 1.2 | 2.7 | Changed in Color Tone |
| Example 12 | Container | Black | 1.2 | 3.0 | Changed in Color Tone |
| Example 13 | Container | Black | 0.5 | 2.7 | Changed in Color Tone |
| Example 14 | Container | White | 2.0 | 2.7 | Changed in Color Tone |
| Comparative Example 1 | Cover | Black | 1.2 | 0.2 | Not changed in Color Tone |
| Comparative Example 2 | Cover | Black | 1.2 | 0.6 | Not changed in Color Tone |
| Comparative Example 3 | Cover | Black | 1.2 | 0.8 | Not changed in Color Tone |
| Comparative Example 4 | Cover | None | - | 1.2 | Not changed in Color Tone |
| Comparative Example 5 | Cover | None | - | 2.7 | Not changed in Color Tone |
| Comparative Example 6 | Cover | Black | 0.2 | 0.8 | Not changed in Color Tone |
| Comparative Example 7 | Cover | Black | 0.2 | 2.7 | Not changed in Color Tone |
| Comparative Example 8 | Cover | White | 2.0 | 0.8 | Not changed in Color Tone |
| Comparative Example 9 | Container | Black | 1.2 | 0.2 | Not changed in Color Tone |
| Comparative Example 10 | Container | Black | 1.2 | 0.6 | Not changed in Color Tone |
| Comparative Example 11 | Container | Black | 1.2 | 0.8 | Not changed in Color Tone |
| Comparative Example 12 | Container | None | - | 1.2 | Not changed in Color Tone |
| Comparative Example 13 | Container | None | - | 2.7 | Not changed in Color Tone |
| Comparative Example 14 | Container | Black | 0.2 | 0.8 | Not changed in Color Tone |
| Comparative Example 15 | Container | Black | 0.2 | 2.7 | Not changed in Color Tone |
| Comparative Example 16 | Container | White | 2.0 | 0.8 | Not changed in Color Tone |

As shown in the results above, the press-through packaging materials according to present invention can have an anti-counterfeit label attached, and enable the authenticity of the package to be easily determined without using a hologram sticker. Additionally, the anti-counterfeit label, unlike the hologram sticker, cannot be peeled off from the press-through package, and thus cannot be misused; the metal pigment that works as an anti-counterfeit label greatly varies in terms of color depending on the manufacturing conditions, and it is thus difficult to copy the same product. Thus, the press-through packaging material according to present invention serves as a powerful deterrent to the distribution of counterfeit drugs.

### Description of the Reference Numerals

1. a metal pigment that serves as a core
2. an amorphous silicon oxide film layer
3. an intermediate layer (a metal layer and/or a metal oxide layer composed of a metal oxide other than silicon oxide)
4. metal particles
5. a weather-resistant coating layer (protective layer)

## Claims

1. A press-through packaging material comprising in sequence
a substrate,
an opaque underlayer laminated on at least a part of the surface of the substrate, and
a printing layer that contains a colored metal pigment, and that is formed on at least a part of the surface of the opaque underlayer;
the colored metal pigment comprising
a metal pigment,
an amorphous silicon oxide film layer formed on the surface of the metal pigment, and
metal particles supported on a part of or on the entire surface of the amorphous silicon oxide film layer,
the opaque underlayer having a mass per unit area of 0.5 g/m² or more and 3.0 g/m² or less, and
the printing layer having a mass per unit area of 1.0 g/m² or more and 3.5 g/m² or less.

2. The press-through packaging material according to claim 1, wherein the metal particles contain at least one element selected from the group consisting of Cu, Ni, and Ag.

3. The press-through packaging material according to claim 1 or 2, wherein the amorphous silicon oxide film layer has a thickness of 10 nm or more and 1000 nm or less.

4. The press-through packaging material according to any one of claims 1 to 3, wherein the metal particles have an average particle diameter of 50 nm or less.

5. A press-through package comprising the press-through packaging material of any one of claims 1 to 4 used for a container and/or a cover material for a drug.
